# EUROPEAN PATENT APPLICATION

(11) **EP 4 506 879 A1**
(43) Date of publication of application: **12.02.2025**
(21) Application number: 23784983.1
(22) Date of filing: 05.04.2023
(51) Int. Cl.: G06Q 50/06, H02J 3/00, G06Q 30/06, G06Q 30/02, G06Q 50/10, G06T 19/00

(54) **RENEWABLE ENERGY TRADING SYSTEM AND METHOD**

(30) Priority: 07.04.2022 KR 20220043129; 23.08.2022 KR 20220105557; 28.02.2023 KR 20230026858
(71) Applicant: Jeong, Su Hyun, Seoul 06641 (KR)
(72) Inventor: Jeong, Su Hyun, Seoul 06641 (KR)
(74) Representative: Plasseraud IP
(86) International application number: PCT/KR2023/004570
(87) International publication number: WO 2023/195759

(57) **Abstract**

The present invention relates to a new and renewable energy trading system and method, and the present invention provides a system and a method wherein: new and renewable energy trading request information is received from a plurality of prosumers who desire to trade new and renewable energy; participating prosumers are classified into a buyer or a seller; a seller prosumer score and a buyer prosumer score are calculated; a matching score, having been evaluated using an evaluation item, is calculated, so as to recommend a suitable seller to the buyer; and a trading space based on a 2D or 3D environment is provided to enable the seller and the buyer to participate together and trade new and renewable energy, so as to enable an efficient trading of new and renewable energy.

## Description

The present invention relates to a new and renewable energy trading system and method, and more specifically, a new and renewable energy trading system and method that can efficiently trade new and renewable energy. In addition, the present invention relates to a computer program running on a computer to provide such a new and renewable energy trading system.

### BACKGROUND ART

New and renewable energy is divided into solar energy, biomass, wind power, hydrogen power, fuel cells, liquefaction of coal, gasification, marine energy, waste-to-energy, and other new and renewable energy, and it also refers to a fluid fuel that is mixed with materials from geothermal, hydrogen, and coal-based materials. However, in a broad sense, new and renewable energy refers to energy sources that replace fossil fuels.

In the past 10 years, our country's energy consumption has recorded the world's highest annual growth rate of 10%, and the greenhouse gas emission growth rate is also the world's highest. Fortunately, although the implementation of the global climate agreement is being delayed, we will soon have no choice but to participate in it, so the need for the development and use of new and renewable energy is gaining more weight.

Currently, the new and renewable energy sources that are actively being developed and commercialized in advanced countries include solar energy and wind energy, and the development of new and renewable energy using biomass, geothermal, wave power, and tidal power is actively progressing.

"In the next 20 years, energy supply and demand will be imbalanced, and in 50 years, it will be almost depleted" With this situation already becoming a reality, the transition to new and renewable energy is an even more urgent task.

Accordingly, a technological means to efficiently trade new and renewable energy is needed.

### PRIOR INVENTION LITERATURE

The preceding invention includes KR application No. 10-2022-0026387.

### DISCLOSURE

### TECHNICAL PROBLEM

Accordingly, the present invention has been proposed to solve the problems described above and aims to provide a system and method capable of efficiently trading new and renewable energy.

The purpose of the present invention is not limited to those mentioned above, and other purposes not mentioned may be clearly understood by persons with ordinary knowledge in the field of technology to which the present invention belongs.

### TECHNICAL SOLUTION

A new and renewable energy trading system according to an embodiment of the present invention to achieve the above objectives is a receiving unit that receives new and renewable energy transaction request information including energy type, energy production volume, possible volume for sales, sales units, volume for purchase required, and desired price of new and renewable energy transactions from a plurality of prosumers who wish to trade new and renewable energy; a classification section that uses the information received above to classify participating prosumers as consumers or sellers; a recommendation unit to find a suitable seller for the above consumer; Providing a trading space that provides 2D or 3D environment-based trading spaces for the seller and the consumer to participate together to transact new and renewable energy; and the transaction execution unit, which is calculated and typed out by calculating the sales fee according to the transaction price information presented and calculating the registration fee, sales fee, consulting fee, and related corporate promotion fee in the transaction space provision section and in the event that the transaction is executed on a 2D or 3D basis, and the classification unit calculates the seller feedback score analyzed by reflecting the reputation of the prosumer classified as the seller in the existing new and renewable energy trading history; calculate the analyzed consumer feed-back score by reflecting the reputation of the prosumer classified as the above consumer in their existing new and renewable energy trading history; calculate the Merchant Feedback score of the Prosumer classified as the Merchant and the Merchant Prosumer Score as evaluated by the evaluation items including the number of entries of the certification information entered into the New and renewable Energy Trading System, the period of use after joining, the number of transactions, and the size of the production facility; calculate the consumer feedback score of the prosumer divided into the consumer and the consumer prosumer score as assessed by the evaluation items including the number of entries of the verification information entered into the new and renewable energy trading system, the period after joined, and the number of transactions; the recommendation section shall calculate the number of matching points evaluated by the evaluation items including the type of new and renewable energy, new and renewable energy production capacity, and the location of energy storage of the prosumer classified as the seller and the type of new and renewable energy of the prosumer classified as the consumer, the desired energy capacity of the new and renewable energy purchased, and the location arrived; The feedback score, the prosumer score, and the matching score are configured to suggest and display one or more recommended sellers to the prospective consumer.

In the methods of new and renewable energy trading system of the present invention, the seller may be issued one of a symbol, a code, a number, a blockchain-based certificate, or a supply certificate (REC, New and renewable Energy Certificate) that can certify power available for sale from a power exchange; the consumer may be provided with one of the symbol, code, number, blockchain-based certificate, or supplied certificate from the seller; and the consumer may be configured to settle the purchase price with the Power Exchange.

In the methods of new and renewable energy trading system of the present invention, if the prosumer requests, a consulting service unit may additionally be included that provides an additional function of providing a guide for utilizing 100% of new and renewable energy for a predetermined amount of energy usage for a predetermined period.

In the new and renewable energy trading system of the present invention, the transaction space providing unit may:
implement the new and renewable energy trading system as an online platform through a smart device; provide a virtual space in the new and renewable energy trading system so that a business tour and online meeting can be performed in a virtual environment based on the metaverse; provide a screen for opening documents related to the new and renewable energy transaction of a company classified as the seller in the virtual space, and link platforms for the authentication of the company; and provide a site where the new and renewable energy is produced by the company by projecting it as the virtual space so that the user can experience it.

A method for trading new and renewable energy using a new and renewable energy trading system according to another embodiment of the present invention comprises the steps of: receiving, by a receiving unit, new and renewable energy transaction request information including energy type, energy production volume, possible sales volume, sales unit, purchase volume required, and new and renewable energy transaction desired price from a plurality of prosumers who wish to trade new and renewable energy; classifying, by a classification unit, the received new and renewable energy transaction request information into consumers or sellers; recommending, by a recommendation unit, a matchable seller for the consumer; providing, by a transaction space providing unit, a transaction space based on a 2D or 3D environment so that the seller and the consumer can participate together to trade new and renewable energy; And the transaction conclusion unit performs a transaction based on 2D or 3D environment in the transaction space providing unit, and if the transaction is concluded, calculates a sales commission based on the presented transaction price information and calculates and outputs a registration fee, a sales commission, a consulting fee, and a related corporate advertising fee;, The above classification unit calculates the analyzed seller feedback score by reflecting the reputation of the prosumer classified as the seller in its existing new and renewable energy trading history; calculate the analyzed consumer feed-back score reflecting the reputation of the prosumer classified as the consumer in the existing new and renewable energy transaction history; calculate the Seller Feedback Score of the Prosumer classified as the Seller and the Seller Prosumer Score as evaluated by the evaluation items including the number of entries of the verification information entered into the new and renewable Energy Trading System, the sign-up periods, the number of transactions, and the capacity of the production facility; calculate the consumer feedback score of the prosumer classified as the consumer and the number of consumer prosumer points evaluated by the evaluation items including the number of entries in the verification information entered into the new and renewable energy trading system, the period after joining, and the number of transactions; the recommendation unit calculates a matching score evaluated by evaluating the type of new new and renewable energy, the energy production capacity, and the location of the energy of the prosumer classified as the seller, and the type of new and renewable energy, the desired new and renewable energy purchase capacity, and the location of the energy needed of the prosumer classified as the consumer; and the recommendation unit is configured to recommend and display one or more recommended sellers to the consumer using the feedback score, the prosumer score, and the matching score.

### ADVANTAGEOUS EFFECT

According to an embodiment of the present invention, the new and renewable energy trading system and method enable efficient and reliable new and renewable energy trading.

According to the energy trading system of the present invention, unlike the existing one-way power transaction where a seller such as KEPCO collects electricity produced at a power plant in bulk and supplies it to the consumers, individual energy producers can sell energy directly to consumers, and consumers can also participate in energy trading as sellers at the same time, thereby promoting two-way transactions and promoting the generation and use of new and renewable energy. Accordingly, since the power producers and sellers are unified, the number of companies that want to produce and sell new and renewable energy is limited, narrowing the energy transaction market, and the problem of narrow choices where electricity consumers want to use new and renewable energy but have no other way than to produce it themselves can be improved.

In addition, the trading system of the present invention enables the sale and purchase of energy through the Electric Grid Network of a power exchange such as KEPCO. In particular, it may be able to meet the desire to choose of users who want to consume electricity by new and renewable energy.

In addition, according to the embodiment of the present invention, a platform-linked execution for authenticity certification of the seller can be used through a trading space provided online, and the facility that company produces new and renewable energy can be toured and experienced through a virtual space.

The effects of the present invention are not limited to those mentioned above, and other effects not mentioned may be clearly understood by persons with ordinary knowledge in the field of technology to which the present invention belongs.

### BRIEF DESCRIPTION OF THE DRAWINGS

FIG. 1 is a conceptual diagram schematically illustrating the apparatus of prosumers using a new and renewable energy trading system according to one embodiment of the present invention.
FIG. 2 is a schematic block diagram of a new and renewable energy trading system according to one embodiment of the present invention.
FIG. 3 shows an example of generating and producing one of new and renewable energy.
FIG. 4 is a flowchart for describing how a new and renewable energy trading system according to one embodiment of the present invention trades new and renewable energy among prosumers.

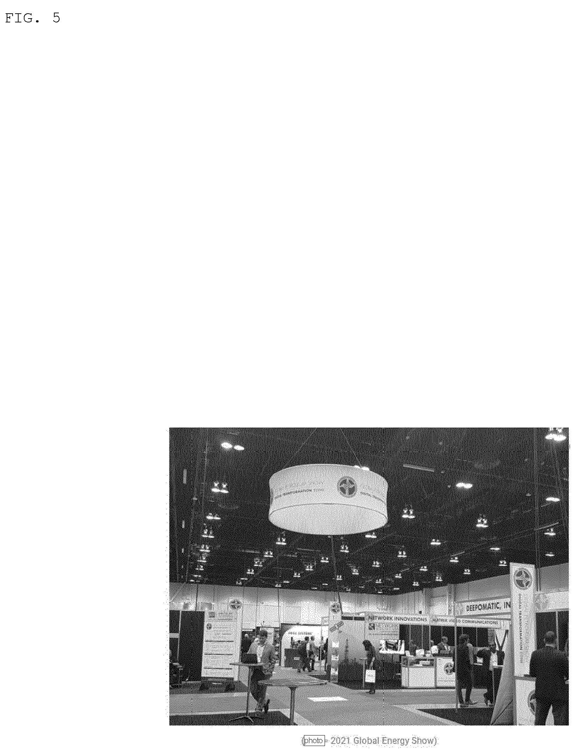

FIG. 5 illustrates an example of an energy trading show that can be held according to an embodiment of the present invention.
FIG. 6 illustrates an example of providing a meeting environment for consumers and sellers in a virtual space in accordance with one embodiment of the present invention.
FIG. 7 shows an example of users taking notes in a meeting environment held in a virtual space according to a single embodiment of the present invention.

### DETAILED DESCRIPTION

The purpose and effect of the present inventions, and the technical configurations for achieving them, will be clarified by referring to the embodiments which will be described in detail later, together with the accompanying drawings. In describing the present invention, if it is judged that a specific description of the notice function or configuration may unnecessarily obscure the gist of the present invention, the detailed description will be omitted. The terms described below are defined in consideration of the structure, role, and function of the present invention, which may vary depending on the intentions or practices of the user, operator, etc.

However, the present invention is not limited to the embodiments disclosed hereinafter, but may be embodied in a variety of different forms. These embodiments are provided only to ensure that the disclosure of the invention is complete, and to fully inform a person of ordinary knowledge in the technical field to which the invention belongs, and that the invention is defined only by the categories of claims described above the patent claims. Therefore, the definition will have to be based on what is said throughout the entire specification.

Throughout the specification, when a part "contains" a component, it does not mean that it excludes other components, unless otherwise stated to the contrary, but that it may include additional components.

Below, we refer to the attached drawings, and we will describe in more detail the desirable embodiments of the present invention.

On the other hand, in the embodiment of the present invention, the combination of each block of the attached block diagram and each step of the flow chart may be performed by computer program instructions. These computer program instructions may be mounted on the processor of general-purpose computers, special-purpose computers, portable notebook computers, network computers, or other programmable data processing equipment, so that those instructions performed through the processors of computer devices or other programmable data processing equipment will create a means to perform the functions described in each block of the block diagram or at each step of the flowchart described below. These computer program instructions may be stored in memory available to a computer device or in machine-readable memory that may be directed to a computer device or other programmable data processing equipment to implement a function in a particular manner, so that each block of a block or flow chart may produce a product containing an instruction means to perform the function described at each step of the flow chart. Computer program instructions may be mounted on a computer apparatus or other programmable data processing equipment, so that a process may be created for a series of operational steps to be performed on a computer device or other programmable data processing equipment, providing steps for executing the functions described in each block of the block and each step of the flowchart.

In addition, each block or step may represent a module, segment, or piece of code containing executable instructions on one of these for executing a particular logical function(s). It should also be noted that in some alternative embodiments it is possible for the functions mentioned in the blocks or steps to occur out of order. For example, two blocks or steps shown one after the other may in fact be executed substantially simultaneously, or the blocks or steps may sometimes be performed in reverse order, depending on the corresponding function.

In the following, we will explain in more detail the small-scale photovoltaic new and renewable energy trading support system, service and method according to the present invention by referring to the attached drawings. In addition, the invention is mainly described on the premise that "new and renewable energy" is the object of trading, but the invention naturally includes a system and method for trading all energy that can be traded on the power grid, i.e., all energy that can be electrized.

The network is divided into Personal Area Network, Local Area Network; LAN), Metropolitan Area Network (LAN; MAN), Wide Area Network (MAN; WAN) and can be configured as networks of various sizes. Networks can consist of wired or wireless networks.

The terminal of the energy consumer (one or more of 20, 50, 70, 100, hereinafter the same) and the terminal of the energy seller (one or more of the 20, 50, 70, 100, hereinafter the same) represent a computing system capable of transmitting and receiving data and/or information by connecting to a remote server or device, such as an energy trading system server 10, through a network 30. Consumer's terminals and seller's terminals are equipped with personal computers such as desktop (desktop), laptop (laptop), etc. PC) device. Alternatively, the consumer's terminal and the seller's terminal may be a mobile device (handheld device) such as a smartphone, personal digital assistant (PDA), tablet PC, etc. A mobile device may be a watch, band, etc., equipped with communication and data processing functions, but is not limited to. Alternatively, the consumer's terminal and the seller's terminal may include, but are not limited to, smart TVs, media players, micro servers, global positioning system (GPS) devices, e-readers, digital broadcasting terminals, navigation, kiosks, MP3 players, digital cameras, and other mobile computing devices.

The consumer's terminal and the seller's terminal 20, 50, 70, and 100 may be other unillustrated computing systems, including components such as a processor, input/output means, means of communication, and memory.

The consumer terminal 20, 50, 70, 100 may be a computer terminal or personal communication device used by the consumer to receive data for energy trading from the energy trading system server 10 or to send the data to the server.

The seller terminal 20, 50, 70, 100 may be a computer server or computer terminal or personal communication device of the seller or the institution to which such seller belongs, which receives data for energy trading from the energy trading system server 10 or sends the data to the server.

The seller's terminal 20, 50, 70, 100 can receive information such as the desired energy source, desired capacity and price of the consumer's terminal directly from the energy trading system server 10 or directly from the consumer's terminal 20, 50, 70, 100, and send a reply to the consumer terminal about the energy source available by the seller's terminal, the energy capacity and price available for sale.

In the present invention, the consumer's terminal or the seller's terminal refers to its own electromechanical device or component, but in the context, it may mean the consumer or seller who receives and receives data through the terminals. In addition, the consumer or seller in this specification shall be understood to mean the consumer's terminal or the seller's terminal in general.

The server 10 of the energy trading system of the present invention is not separately shown, but may include a communication unit, a control unit, an input/output unit, and a database (memory part).

The telecommunications unit can transmit and receive various data and/or information with external devices such as consumer terminals or seller's terminals through the network. The communication part can be composed of various communication modules that enable network communication.

The communication unit can transmit authentication information for prosumer registration and transaction information for energy trading to consumer's terminals (20, 50, 70, 100) or seller's terminals.

The control unit can authorize traders (sellers, consumers), calculate evaluation scores, recommend traders, etc.

The input/output unit may interface with the user of the consumer's terminal or the seller's terminal and the operator of the stem server 10 in energy trading. The user or operator can transmit or input various information to the energy trading system server through the input and output department, and the energy trading system server can output various information to the user or operator through the input and output section.

The memory section may store instructions and/or programs, or store data and/or information. For example, the memory part could be a storage device, such as a hard disk or flash memory. The memory part may be other storage media that are not illustrated. The memory unit may store authentication information or transaction information to be transmitted by the telecommunications department to the consumer's terminal or the seller's terminal, and information such as transaction capacity, sales price, and transaction result received by the telecommunications department from the consumer's terminal or the seller's terminal. In addition, it can store various status data, such as whether the consumer's terminal is online, whether the seller's terminal is online, and the location information of the consumer's terminal or the seller's terminal.

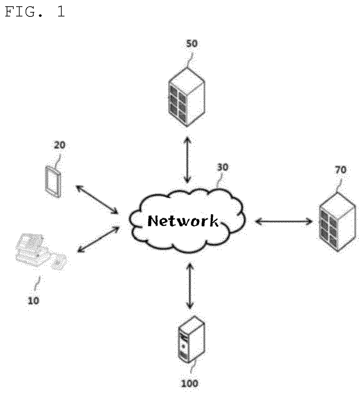

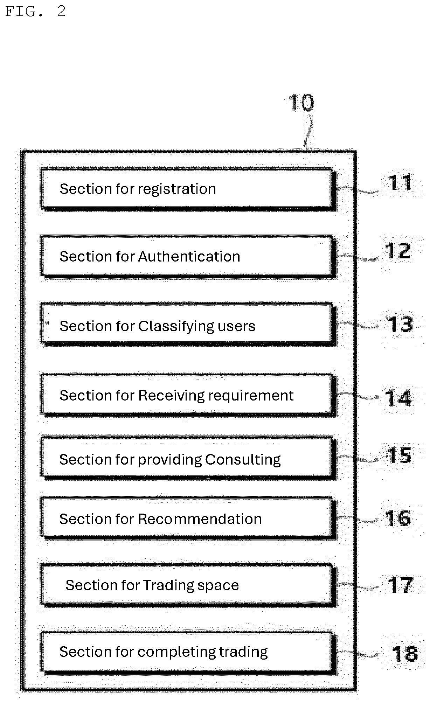

FIG. 1 is a conceptual diagram outlining the apparatus (20, 50, 70, 100) of prosumers using a new and renewable energy trading system 10 according to one embodiment of the present invention, and FIG. 2 is a schematic block diagram of a new and renewable energy trading system according to one embodiment of the present invention.

FIG. 1 conceptually illustrates the communication connection between the devices of consumers and sellers who wish to use the new and renewable energy trading system 10. Referring to FIG. 1, it can be understood that the new and renewable energy trading system 10 and various devices 20, 50, 70, and 100 of multiple consumers and sellers can be connected via network 30.

Referring to FIG. 2, a new and renewable energy trading system 10 according to one embodiment of the present invention may include a prosumer subscription unit 11, a prosumer certification unit 12, a consumer and seller classification unit 13, a receiving unit 14, a consulting provision unit 15, a recommendation section 16, a trading space provision unit 17, and a transaction execution unit 18.

The new and renewable energy trading system 10 may first allow producers or sellers or consumers or consumer (purchasing company) who wish to trade new and renewable energy to sign up as prosumers of the new and renewable energy trading system 10 through the prosumer register 11. In other words, it is possible to register as a new and renewable energy trading company in advance through the prosumer register unit (11), and to provide the registered company with a function that allows it to promote its own company and the energy of it.

The prosumer authentication unit 12 allows the seller or consumer to access the new and renewable energy trading system 10 after successful authentication. This prosumer certification process can use the known authentication technology.

Consumer and Seller Classification 13 may classify participating prosumers as consumers or sellers using the information received above for new and renewable energy transaction requests.

The consumer and seller classification section 13 may display the feedback score or information analyzed on the basis of the new and renewable energy transaction history of the company classified as the seller, such as the number of stars or star ratings, ratings, and reviews, as information about the seller.

The feedback score refers to a score that reflects one-sided feedback or evaluation of existing energy trading, and evaluation of trading experience in the next transaction.

The calculation of the feedback score can be determined by considering the sustainability of the transaction, such as whether there is no false attempt to sell based on the actual transaction history of the energy producer/seller, whether the selling price of energy does not disturb the range of the market price (e.g., within 120%), whether the service and questions of the energy consumer are answered quickly and accurately (promptly/accurately and without unnecessary questions or conversations), and whether the energy produced has a stable average quantity (taking into account daily, weekly, monthly, seasonal, etc.).

The feedback score can be used to evaluate the transaction reliability of the prosumer as a score, and the transaction reliability level such as the certification result at the time of joining the prosumer and the quality of sales energy can be left as a review and scoring for each transaction, so that it can help other prosumers select a trading partner room in the future.

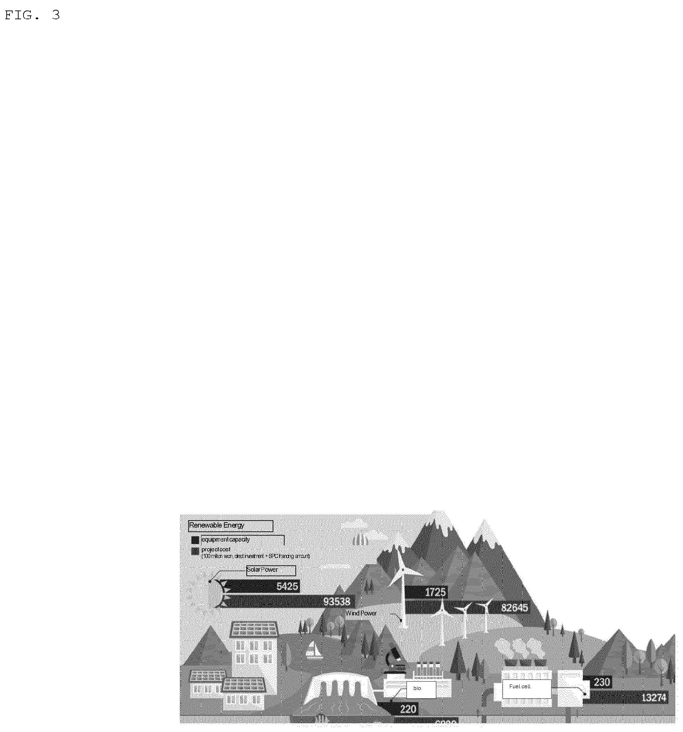

New and renewable energy types are divided into solar energy, biomass, wind power, hydrogen power, fuel cells, liquefaction of coal, gasification, marine energy, waste-to- energy, and others, and may be at least one of the liquid fuels mixed with geothermal, hydrogen, and coal-based materials. FIG.3 is an illustration showing an example of generating and producing some new and renewable energy among the aforementioned types of new and renewable energy.

Prosumers are consumers or producers who participate in the production of new and renewable energy while consuming new and renewable energy. Therefore, among multiple prosumers, the seller enters into a sales condition that includes the type of new and renewable energy to be sold through the terminal, the energy production, the possible sales volume, and the desired price of new and renewable energy transactions.

And among the multiple prosumers, the consumer enters the terms of the purchase, which include the amount of new and renewable energy they want to buy, the desired purchase price, and the desired time to trade.

The purchase conditions may be entered by the consumer entering the required amount of electricity and directly stating the desired purchase price range. In order for consumers to refer to entering the purchase price, the energy trading system 10 of the present invention may provide the consumer with the average transaction price at that time or the price advertised by other sellers.

In addition, the consumers may enter the purchase price as a specific figure, but at a certain range of prices.

In addition, upon request by the prosumer, a guide to utilize 100% new and renewable energy for a predetermined prescribed energy capacity over a period of time, e.g., recommending that the consumer meet the requirements for the configuration of a self- generating production facility, or providing additional consulting, may be configured to
be provided by the consulting provider 15. Here, if a prosumer receives consulting services through a consulting provider, a corresponding consulting fee may be charged to the prosumer.

The consulting services may include services that assist consumers who purchase energy in producing and selling energy or converting to sellers of surplus electricity. The above services may include services that help energy consumers reduce the amount of energy purchased through energy conservation or increase the frequency of new and renewable energy utilization through self-generation.

If the consumer wishes to produce energy, i.e., to build a power generation facility, he or she can provide information on the installation of power generation facilities in the energy source (e.g., solar power, wind power, etc.) that the consumer has mainly traded in, based on the transaction history of the consumer. For example, artificial intelligence technology can be used to recommend equipment for new and renewable energy generation facilities based on consumers' transaction history to determine which energy sources they primarily use. In addition, if it is determined that the monthly consumption is 50 kW based on the transaction history, it can recommend power generation equipment suitable for the consumer's usage, such as power generation equipment that can produce 50-60 kW per month. In addition, the energy trading system 10 may be configured to recommend to consumers the power generation facilities of any energy source, or the energy generation facilities that have the best power generation performance in the characteristics of the energy source and the region in which the consumer is located. If, not only if the consumer chooses the power generation equipment product recommended by the energy trading system 10 of the present invention, but also if the consumer does not select it, it may be stored as a consumer behavior history and configured to be used in the service provided to the consumer in the future.

Recommendation section 16 may serve as a recommendation for consumers who wish to use or purchase new and renewable energy to companies that meet the criteria. The conditions may include at least one of the following: the type of new and renewable energy entered by the consumer, the quantity, the price, the trading environment, the distance between producers and consumers, the reliability of the transaction, and the sustainability of the transaction.

In other words, if a seller or consumer types a need for new and renewable energy in a situation, the recommendation section can recommend companies that match the need.
In particular, the condition of the recommendation may preferably include the distance between the producer and the consumer.

In this case, the consumer may be set up to pay the new and renewable energy trading system 10 in exchange for the virtual space and online currency that have been accumulated or purchased in advance to receive a recommendation from the recommend unit 16. Here, monetary means can be provided with credit, etc. Even when contacting the company by recommendation, it may be set up to pay a certain transaction instrument or type of currency as a consideration to the new and renewable energy trading system 10.

The trading space provider 17 can provide a 2D or 3D trading space on an online platform where consumers and sellers can participate together to trade new and renewable energy.

This 2D or 3D trading space can be used for the purpose of simulating the trading system, as well as improving the visibility of various tools in the energy trading system and improving the familiarity and reliability of the system for consumers who lack overall energy trading experience.

The 3D space can utilize metaverse technology and can be configured to enable the display of business meetings or transaction data in the virtual space.

As an embodiment, the trading space provider 17 may be implemented as an online platform via an electronic device, e.g., a trading space that provides consumers and sellers with detailed information about new and renewable energy through a web page or a dedicated application, inputting transaction requirements, and outputting, and closing the transaction.

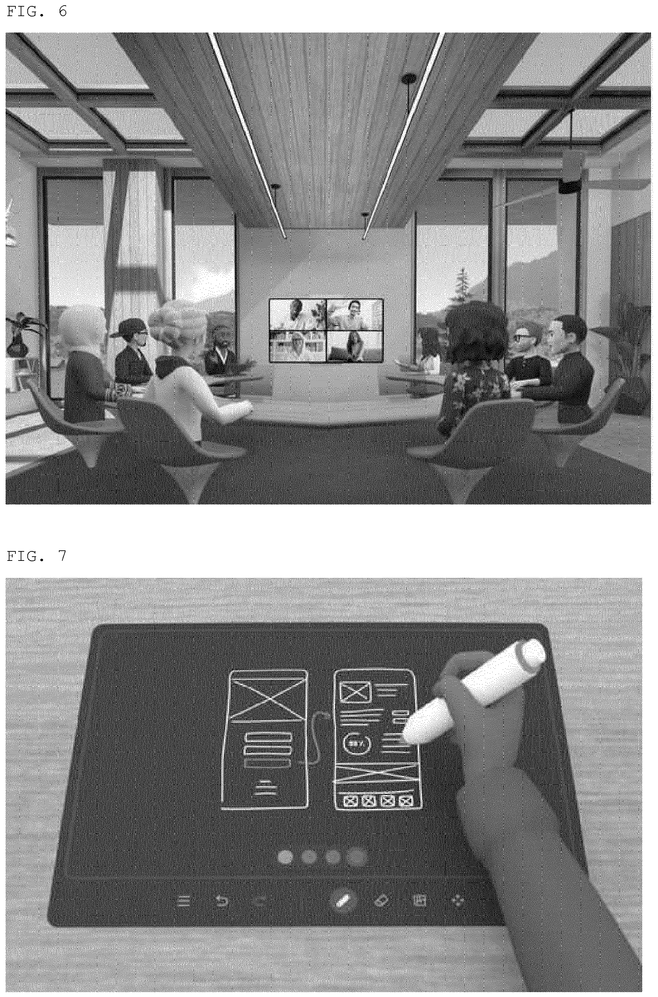

As an embodiment, the transaction space provider 17 can provide a virtual space to enable business tours and meetings in a metaverse-based virtual environment. For example, you can offer a virtual space for sellers and consumers to take business tours and meetings in a virtual environment. FIG. 6 illustrates an example of providing a meeting environment for consumers and sellers in a virtual space according to one embodiment of the present invention.

The transaction space providing part 17 enables step-by-step business, and for this purpose, for example, the virtual space may provide a screen for disclosing documents related to new and renewable energy transactions of a business categorized as a seller and may link a platform for authentication of said business. At this time, a predetermined credit can be set to be paid to the new and renewable energy trading system 10 when the authentication of said vendor needs to be performed.

As shown in FIG. 7, the consumer or seller may take notes in a virtual meeting environment just as they would in a physical meeting. In addition, through handwriting, the consumer can enter and modify the terms of purchase, and the seller can enter and modify the terms and condition of sale and initiate the meeting held in the virtual space and enter the contract in accordance with the terms and conditions.

The transaction space providing section 17 may provide the projection of the facility of new and renewable energy produced by the seller company as the virtual space.

When a transaction is completed in a meeting held by the online platform and trading space providing section 17, the transaction execution section 18 may calculate and print out the registration fee, subscription fee, sales fee, consulting fee, and related enterprise promotion fee according to the transaction price information presented. In other words, when a transaction is completed, a certain amount of credit corresponding to the closing of the transaction can be set up to be paid from the consumer and seller to the new and renewable energy trading system 10. The membership and registration fees for the transaction may be paid first.

In this way, the new and renewable energy trading system 10 according to one embodiment of the present invention can implement credit operation through membership fees, sales commissions, related company promotion fees, consulting fees, and credit purchase costs, and provide the seller and consumer with a new and renewable energy trading according to the usage history of the trading system 10, it is possible to provide a function that allows additional credits to be accumulated. Credits can be used as a means of transaction.

In one embodiment, new and renewable energy trading system 10 may be a server configured for the user to access using a user terminal. For example, the user may access the new and renewable energy trading system 10 via a wired or wireless network from any computing device such as a mobile communication terminal such as a smartphone, a personal computer, a laptop, a set-top box for PDAs, tablets, IPTV, etc., an artificial intelligence speaker or a network server.

For example, new and renewable energy trading system 10 may be an application service server that enables the operation of an application (or app) running on a user's terminal. Alternatively, the new and renewable energy trading system 10 may be a web server that provides web pages accessible by a web browser running on the user's terminal.
However, this is an illustrative example, and in other embodiments, the system 10 in new and renewable energy trading may be implemented in the form of a user terminal such as a smartphone rather than a server itself.

The devices described herein may be wholly hardware or may be partly hardware and partly software. For example, new and renewable energy trading system 10 may collectively refer to a device for transmitting data of a particular format and content by electronic communication method and related software thereof. Terms such as "unit", "module", "server", "system", "platform", "device" or "terminal" herein are intended to refer to a combination of hardware and the software powered by such hardware. For example, the hardware here may be a data processing device that includes a CPU or other processor. In addition, software that is driven by hardware can refer to running processes, objects, executables, threads of execution, programs, etc.

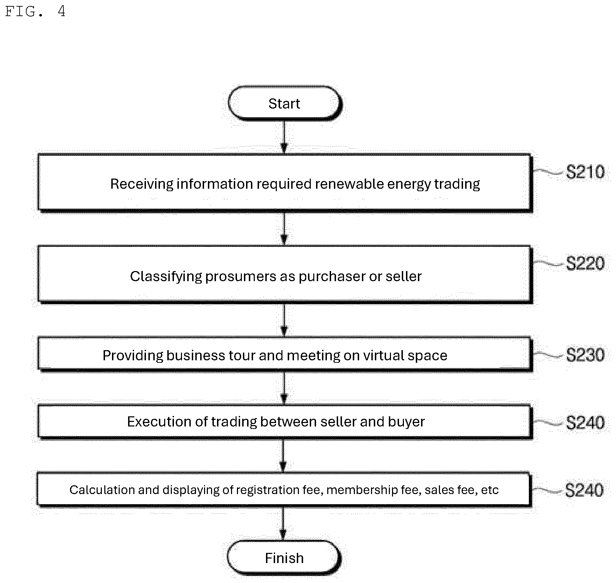

FIG. 4 is a flowchart for describing how a new and renewable energy trading system according to one embodiment of the present invention trades new and renewable energies. Referring to FIG. 4, a new and renewable energy trading system according to one embodiment of the present invention is a method of receiving new and renewable energy transaction request information including energy type, energy production, possible sales volume, sales unit, purchasing needs, desired price of trading new and renewable energy from multiple prosumers who wish to trade new and renewable energy (S210), and categorizing participating prosumers as consumers or sellers using the new and renewable energy trading request information received above (S220). It is providing the above seller and the consumer a 2D or virtual space to enable business tours and meetings in a virtual environment (S230), a stage in which a dialogue between the seller and the consumer occurs through the transaction space (S240), and if the transaction is completed at a transaction meeting held in the virtual space, the stage (S250) in which the registration fee, sales fee, consulting fee, and related enterprise promotion fee are calculated and printed out according to the transaction price information presented. Registration fees may require prepayment at the necessary stage for the transaction.

Since the energy traded in the present invention is ultimately electricity (electric power), it may be configured to use the KEPCO power grid as a trading infrastructure, which is not necessarily limited to this, and the network of other power exchanges (e.g., smart grid) may be used.

In addition, the present invention may assign a producer unique code, a consumer unique code, and use it for the authentication of prosumers. For example, in the energy trading system 10 of the present invention, when the seller and the consumer accept the terms and condition of the transaction and enter their respective unique codes, the seller's energy holdings decrease by the amount of sales occurred in the energy network of the power exchange, and the consumer's holdings may be configured to increase by the purchase volume (sales volume) transacted.

In other words, in the energy trading system of the present invention, when an energy transaction is carried out within the power grid of KEPCO, the amount of energy retained is increased or decreased, as if cash is deposited or withdrawn from a bank account of a financial institution through an online financial transaction, and the seller and the consumer can be configured in such a way that both the seller and the consumer can be deducted from the sale or use as a prosumer and the energy can be sold to the remaining reserves.

On the other hand, the New and renewable Energy Certificate (REC) is a certificate certifying that energy has been supplied through a new and renewable energy facility, and the energy streaming system of the present invention can also be configured to enable energy trading based on REC, and at this time, REC is issued to the seller by a power exchange such as KEPCO, and the consumer can purchase energy by receiving REC from the seller. However, RECs are only examples, and symbols, signs, numbers, or blockchainized certificates may be used to certify the availability of power data.

The sale of electricity in the present invention and the payment of the power to be purchased may be configured to be possible on such a REC basis. Specifically, sellers can sell RECs and consumers can pay for energy based on RECs.

In other words, in the present invention, the consumer and the seller sell and settle each other on a REC basis, and the consumer can deduct and settle the electricity purchased along with the general electricity bill for the power exchange such as KEPCO.

In the energy trading system of the present invention, the LOT or batch that can produce and sell energy is numbered, and it can be configured so that it can be sold by the amount corresponding to the LOT/batch. In other words, in the present invention, the electricity producer and the seller are not physically directly connected but use the network of the established power exchange such as KEPCO to quantify/data the electricity that is transferred. Since the movement of electricity and the transaction path between the seller and the consumer on the platform of the trading system are different, it is possible to trade electric energy without the need for a direct connection between the production and consumption sites.

In the case of KEPCO and KEPCO KDN (e.g.), the amount of power generation is controlled and supplied by predicting the power consumption pattern, but the electricity supply method of KEPCO or KEPCO KDN manages the production and supply volume by predicting demand information from the point of view of the producer and seller, which hinders the development of the production capacity of the electricity generation producer using new and renewable energy, lowers the motivation to produce, and the possibility of improvement is lower than that of the producer competition market because it is a monopoly market despite the failure to predict the quantity of demand and supply, but in the energy trading system by the present invention, individual power generation facilities can reliably trade energy in the direct market. To a certain extent, the problems caused by the monopoly of the sales network can be resolved.

To explain in more detail how to use the KEPCO grid network in the energy trading system of the present invention, using KEPCO's grid network spread across the entire country, the electricity producer supplies electricity to KEPCO, and for the amount of electricity transmitted to KEPCO, he is assigned a unique symbol, sign, or number for the data from KEPCO, or receives a blockchain certificate, and the electricity producer provides the matching electricity consumer/consumer on the energy trading platform of the present invention with the above authentication symbol by presenting a code, number, or blockchain certificate, new and renewable energy will be able to be sold. After that, the consumer can present the data information as much as the purchase amount to KEPCO and deduct it from the monthly electricity bill.

In addition, power exchanges and telecommunication companies such as KEPCO that provide a grid network for the sale of electricity in the energy trading system of the present invention and payment therefor may be configured to identify the producer (seller) and consumer (consumer), that is, the prosumer, by a unique number/symbol.

In the present invention, in addition to a grid network provider such as KEPCO, other power exchanges, electricity storage such as energy warehouses, and energy storage distributors may be configured to participate in transactions for the transmission and the storage of traded energy.

The energy trading system of the present invention is easy for anyone to register and use as an electricity seller, and it is easily accessible for the elderly, women, and young people who are not familiar with electricity or technology to use it, so that men and women of all ages can lead market in using electricity as a consumer subject.

The energy trading system server 10 of the present invention may post the average of energy prices on a daily basis or for a prescribed period of time and allow consumers or sellers to inquire about price changes. The energy trading system server 10 of the present invention can display the price or the change in price in graphs, numbers, etc., and the price quoted by the seller to the consumer can also be displayed.

In addition, in the energy trading system of the present invention, the purchase amount may be calculated based on the monthly or annual electricity consumption of the consumer, and the system may recommend the seller for purchase, and if the amount of electricity purchased by the consumer exceeds the usage, the surplus may be registered for sale and resold.

In addition, according to the energy trading system of the present invention, it is possible to trade not only energy between sellers and consumers located in nearby areas, but also to trade on a nationwide basis, thereby expanding the new and renewable energy market, and the person who purchases and uses the necessary electricity can select the desired new and renewable energy source and price, and the seller can connect with various consumers.

In addition, since most of them use already installed networks/grids and use existing grid-network technology, it can be expected to reduce the burden of installing additional power grids of supply chains.

On the other hand, the adoption of the energy trading system of the present invention is desirable in that anyone who uses electricity can safely and quickly select and control his or her own electric energy using the platform, away from the state of monolithic power production and sales at a time when fundamental innovation in energy production and sales is required in response to climate change. On the one hand, the number of sellers of new and renewable energy can increase as the purchasing market for new and renewable energy expands, and on the other hand, it increases the desire of consumers to produce new and renewable energy, so that they can become sellers by equipping them with new and renewable energy production facilities.

In the present invention, when registering for a system for trading new and renewable energies, the user may be asked whether it is an energy producer or a consumer. If the subscriber is both a producer and a consumer, it can be configured to select both.

Producers who want to sell energy can select and enter the energy source they produce and configure it to enter the average production per unit period, e.g., the average daily production, or the average monthly production. In addition, it can be configured to select and input the amount of electricity sent to KEPCO and the amount of storage to the producer, and to enter the desired sales price separately from the production volume.

All of these input methods can be configured so that the input can choose the method of selecting from the given values and the method of direct input, and when entering the desired selling price of the energy, it is possible to refer to the price published in the energy trading system 10 of the present invention.

On the other hand, the energy consumer (consumer) may be configured to enter the electricity usage of the previous month or annual average, the amount of electricity to be purchased, and the energy source by unit period.

The consumer's input of energy sources can be entered according to their preferences, such as wind, solar, or biomass (e.g., solar first, biomass second, wind third, etc.).

In addition, when the consumer inputs the amount of electricity he wants to purchase, the amount of electricity that is more than 100% to 120% of the input of the required amount of electricity can be configured so that a list of producers that can be sold is automatically extracted and provided to the consumer.

At this time, the producers to be automatically extracted can be classified and provided based on the value of the distance from the consumer's location, and the consumer can sort only the producers within a certain distance so that the producers can be extracted.

In addition, the consumer may have the producer extracted based on the producer's energy sales price, in which case the consumer may be configured to extract only those producers who offer a sales price within a prescribed range, e.g. - 10% to + 20%, based on the average energy disclosure value for the day, or the system may match and recommend a producer who offers a selling price that is closest to the consumer's desired input price.

In this respect, if the system for new and renewable energy trading of the present invention is adopted, it is possible to propose a solution that can cover 100% of the energy required by consumers based on the data on the average monthly electricity used by consumers, the amount of purchase required, and the amount purchased annually. On the other hand, based on the consumer's purchasing history, the consumer's energy purchasing pattern, the consumer's requirements (desired energy source, price, amount of energy, distance from the seller, seller's energy sale/available time, etc.), and the seller's reliability of the company, including the seller's energy supply stability, can be matched with the best pursuing energy seller.

In addition, in the case of matching a seller and a consumer, the "matching score", which determines the suitability of both parties to the transaction, may be calculated according to the above-mentioned energy purchasing patterns and consumer requirements (e.g., desired energy source, price, amount of energy, distance from the seller, quantity of energy, amount of energy available, etc., the seller's score (i.e., prosumer score, feedback score) reflecting the seller's response rate, reliability of the response, and the seller's confidence level in the quality of energy, etc., as described above.

For example, if the energy source that a consumer wants to purchase is solar, a seller who can sell electric energy from solar can be assigned an energy source matching score of 100%. In addition, if the seller's energy production/sales volume covers 100% of the energy purchases/consumption of consumers, 100% capacity matching points can be assigned. Of course, in addition to %, the matching score can be expressed as an integer, such as 0 ~ 100 points, or as a decimal, or as a fraction, etc. In addition, a seller who can only sell a small amount of less than the desired amount may be assigned a matching score equal to that percentage (e.g., 50%).

Matching points based on the physical distance between the consumer and the seller can also be assigned a distance matching score in inverse proportion to the distance. For example, 100% for 0~10 km or less, 70% for 10~30 km, 50% for 30~50 km, and so on.

Alternatively, additional distance matching points may be assigned to each administrative district, for example, if a seller is located in the same city, additional points may be awarded. The size of the extra points can be set in inverse proportion to the size of the administrative unit to which the seller and the consumer belong at the same time, for example, if they are located in the same district, they may be given a greater value than if they are located in the same province.

On the other hand, in addition to transactions other than professional producers and individual consumers, the matching score can be given additional points to 1 (e.g., transactions between small-scale power generation facilities) if one of the two small producers trades as consumers, or 2 (e.g., household-to-household energy transactions) if general consumers trade energy through self-generation. Since these matching points are generally awarded to sellers as they are a transaction method in which consumers choose sellers, additional points can be given to small power generation facilities that are sellers and households that are sellers, in case 1 and case 2 above. In order to ensure the reliability and fairness of the awarding of such additional points, the energy trading system of the present invention performs a certification procedure for the production equipment or production capacity of the seller and the average amount of electricity consumed by the consumer at the time of membership registration, and the certification may be configured so that it can be performed on the basis of the data submitted by the user who intends to sign up as a seller and a consumer. In other words, when calculating prosumer scores, prosumer information can be objectively evaluated.

On the other hand, in online energy trading, it is necessary to certify the credibility of the seller's product to be tradable, that is, the reliability of the seller and the reliability of the energy to be sold. In other words, due to the nature of online transactions, and due to the incorporeal nature of untraceable energy, it is necessary to certify the tradability or reliability of the seller and the energy he or she sells.

To this end, the present invention may be configured to certify that the seller is not double-trading a limited amount of electricity. For example, if the electricity sent to KEPCO is 50 kW, the amount of electricity that can be sold by the seller should be limited to 50 kW, and even 50 kW of electricity can be designed to be restricted so that it cannot be traded in duplicate. In addition, in order to prevent duplicate transactions, to prohibit further transactions before the completion of the approval of the sales transaction, if 30 kW out of the 50 kW available for sale is in progress, it may be configured to be converted to an inactive state in which it cannot be traded because 30 kW is being traded, or the capacity of the energy available for sale (e.g., 20 kW) may be displayed separately.

In addition, the energy trading system of the present invention may additionally include a system in which the seller prosumer certifies that he or she is a legitimate producer and seller capable of selling energy using a business license, etc.

On the other hand, based on the feedback score, i.e., the prosumer score is calculated, including the feedback score, and the prosumer score is an indication of the confidence of how competitive you are in a transaction, and can be configured to be linked to the feedback score. However, the prosumer score is calculated except for the feedback score in the absence of existing transactions, and the feedback score can only be calculated in the case of existing transactions, because the feedback score is a score that is evaluated based on the experience of the other party in the existing transaction.

The reliability of the prosumer can be scored from the beginning with the input information and company data even if there is no trading experience, so the prosumer score can be calculated without existing transactions. The prosumer score is calculated to evaluate prosumers based on non-transaction items such as the number of transactions, the number of items to enter the certification information for joining the prosumer, the fidelity of information entry, and the size and year of establishment of the production facility.

The matching score indicates the suitability of both parties for the transaction, and even if the score of two prosumers is high for each, the score for matching the two is not necessarily high.

In the end, the energy trading system of the present invention calculates the matching score by considering both the prosumer's evaluation score (prosumer score) using non-trading information, and the feedback score due to the transaction information, so that the energy trading environment, which is unfamiliar and unreliable to the general public, can be improved in a more consumer-friendly way, thereby activating energy trading.

In addition, according to the present invention, the power producer can participate in the operation if desired regardless of the size of the production facility, and it has the advantage that there is no need for a physical power grid connection between the prosumers.

The memory department may contain a database for storing such information and providing search and update functions.

The computer storage medium or readable medium on which the program of the present invention is stored includes a non-transitory media such as magnetic, optical, and semiconductor storage media (e.g., hard drive, optical disk, flash memory, DRAM).

The present invention provides, among other things, a computer system comprising hardware (e.g., one or more microprocessors) programmed to perform the methods described herein, as well as a computer-readable medium encoding instructions for performing the methods described herein.

The steps of the method or algorithm described in connection with embodiments of the present invention may be implemented directly as a hardware module, a software module, or a combination of the two executed by the processor. The software module may reside on random access memory (RAM), ROM, EPROM, EEPROM, flash memory, registers, hard disks, removable disks, CD-ROMs, or any type of computer- readable recording medium well known in the field of technology to which the invention belongs. The exemplary recording medium is connected to a processor, which is capable of deriving information from the recording medium and writing information to the recording medium.

Alternatively, the recording media may be integrated with the processor. Processors and recording media can also reside within integrated circuits on demand (ASICs). ASICs can also reside within mobile devices. Alternatively, the processor and recording media may reside as individual components within the mobile device.

Above, a specific embodiment of the present invention has been described in detail. However, those with ordinary knowledge in the field of technology to which the present invention belongs will understand that the idea and scope of the present invention are not limited to these specific embodiments but can be modified and transformed in various ways within the scope of not changing the gist of the present invention.

Accordingly, the embodiments described above are provided to a person with ordinary knowledge in the technical field to which the invention belongs, and therefore must be understood as illustrative and not limited in all respects, and the invention is only defined by the categories of claims.

## Claims

1. A new and renewable energy trading system, comprising:
a receiving unit to receive new and renewable energy transaction request information from multiple prosumers who wish to trade new and renewable energy, including energy type, energy production volume, available sales volume, selling units, volume for purchasing, and a desired price for new and renewable energy trading;
a classification section to utilize the new and renewable energy transaction request information received above to classify participating prosumers as consumers or sellers;
a recommendation unit to recommend one or more suitable sellers for the consumers;
a trading space providing unit to provide a trading space based on a 2D or 3D environment for the sellers and the consumers to participate together in trading new and renewable energy; and
a transaction execution section to output sales fee calculated according to the transaction price information presented, and by calculating a registration fee, a sales fee, consulting fee, and a related corporate promotion fee, if a transaction is made based on 2D or 3D environment in the above transaction space providing unit, and a transaction is completed,
wherein the classification section is configured to:
calculate an analyzed seller feedback score based on the reputation of the prosumer classified as the above merchant in the existing new and renewable energy trading history,
calculate an analyzed consumer feedback score based on the reputation of the prosumer classified as the above consumer in the existing new and renewable energy transaction history,
calculate the seller prosumer score evaluated by the evaluation items that include the seller feedback score of the prosumer classified as the seller, the number of entries of authentication information entered into the new and renewable energy trading system, the duration after join, the number of transactions, and the size of the production facility,
calculate the consumer prosumer score evaluated by the evaluation items that include the consumer feedback score of the prosumer classified as the consumer, the number of entries in the authentication information entered into the new and renewable energy trading system, the number of sign-up periods, and the number of transactions,
wherein the recommendation unit is configured to:
calculate a matching score evaluated by the evaluation items including the type of new and renewable energy, production capacity, and location of the prosumer classified as the seller above, with the type of new and renewable energy of the prosumer classified as the above- mentioned consumer, the energy capacity of the prosumer to purchase, and the location of its usage, and
recommend one or more recommended sellers to the consumer based on the feedback scores, the prosumer scores, and the matching score.

2. The new and renewable energy trading system of claim 1, wherein the seller receives at least one of a symbol, code, number, a blockchainized certificate, or a New and renewable Energy Certificate (REC) from the power exchange that can certify the power available for sale,
wherein the consumer is provided by the seller with at least one of the above symbols, code, numbers, blockchainized certificates, or certificates of supply, and
wherein the new and renewable energy trading system configured to allow the consumer to settle the purchase price on the power exchange.

3. The new and renewable energy trading system of claim 1, wherein the new and renewable energy trading system is **characterized by** the inclusion of an additional consulting department that, upon request by the prosumer, provides an additional function to provide guidance on the utilization of 100% new and renewable energy for a predetermined amount of energy usage over a certain period of time.

4. The new and renewable energy trading system of claim 1, wherein in the above trading space providing unit,
the new and renewable energy trading system can be implemented as an online platform through smart devices,
wherein a virtual space can be provided for business tours and meetings in a metaverse-based virtual environment for the new and renewable energy trading system,
wherein, in the virtual space, it is possible to provide a screen to disclose documents related to the new and renewable energy transaction of the company classified as the seller, and to link the platform for the authentication of the company, and
wherein the new and renewable energy trading system is **characterized by** projecting the site of new and renewable energy production by the company into the virtual space for providing experience.

5. A new and renewable energy trading method using a new and renewable energy trading system, the new and renewable energy trading method comprising:
receiving, by a receiving unit, new and renewable energy transaction request information from multiple prosumers who wish to trade new and renewable energy, including energy type,
volume of energy production, available sales volume, units sold, purchase requirement, and desired price for new and renewable energy trading;
utilizing, by a classification unit, the new and renewable energy transaction request information received above to classify participating prosumers as consumers or sellers;
recommending, by a recommendation section, one or more suitable sellers to the consumers;
providing a trading space based on a 2D or 3D environment for the seller and the consumer to participate together to trade new and renewable energy; and
if the transaction execution department conducts a transaction based on 2D or 3D environment in the transaction space provision section, and the transaction is made, the transaction is calculated according to the transaction price information presented, and the registration fee, sales fee, consulting fee and related corporate promotion fee are calculated and printed;
wherein, the classification part:
reflects the reputation of the prosumer classified as the above merchant in the existing new and renewable energy trading history, and calculates the analyzed seller feedback score,
calculates the analyzed consumer feedback score by reflecting the reputation of the prosumer classified as the above consumer in the existing new and renewable energy transaction history,
evaluates the seller feedback score of the prosumer classified as the seller and the seller prosumer score by the evaluation items including the number of entries of the authentication information entered into the new and renewable energy trading system, and calculates the duration after join-up, the number of transactions, and the size of the production facility of the prosumer; and
calculates the consumer feedback score of the prosumer classified as the consumer and the consumer prosumer score evaluated by the evaluation items including the number of entries in the authentication information entered into the new and renewable energy trading system, the duration after join-up, and the number of transactions;
wherein, the recommendation part mentioned above:
calculates the matching score evaluated by the evaluation items including the type of new and renewable energy, new and renewable energy production capacity, and material location of the prosumer classified as the seller above, the type of new and renewable energy of the prosumer classified as the above-mentioned seller, the energy capacity of the prosumer to purchase new and renewable energy, and the location of the usage, and
wherein the new and renewable energy trading method is **characterized by** recommending and displaying one or more recommended sellers to the consumer using the feedback score, the prosumer score and the matching score above.

6. The new and renewable energy trading method of claim 5,
wherein the seller is issued either a symbol, code, number, a blockchainized certificate, or a New and renewable Energy Certificate (REC) from the power exchange that can certify the power available for sale;
the consumer is provided by the seller with one of the above symbols, codes, numbers, blockchainized certificates, or certificates of supply, and
wherein the new and renewable energy trading method is configured so that the consumer can settle the purchase price on the power exchange.

7. The new and renewable energy trading method of claim 5,
wherein the consulting provider additionally includes a step that provides an additional function that provides guidance on how to utilize 100% new and renewable energy for a predetermined set amount of energy usage over a period of time, if requested by the prosumer.

8. The new and renewable energy trading method
of claim 5, wherein in the above trading space
provider,
the above new and renewable energy trading system can be implemented as an online platform through smart devices,
wherein it is possible to provide a virtual space for business tours and meetings in a metaverse-based virtual environment for the new and renewable energy trading system,
wherein in the virtual space, it is possible to provide a screen to disclose documents related to the new and renewable energy transaction of the company classified as the seller, and to link the platform for the authentication of the company, and
wherein the new and renewable energy trading method is **characterized by** projecting the site of the new and renewable energy production site from the above company into the virtual space for providing experience.

9. A computer program that provides a new and renewable energy trading system, wherein the receiving unit receives new and renewable energy trading request information from multiple prosumers who wish to trade new and renewable energy, including energy type, energy production, available sales volume, units sold, purchase requirement, and desired price for new and renewable energy trading;
the classification unit uses the information received above to classify participating prosumers as consumers or sellers;
recommendation section recommending a suitable seller to the above consumer;
wherein a trading space based on a 2D or 3D environment is provided so that the seller and the consumer can participate together to trade energy in new and renewable assets; and
if the transaction execution department conducts a transaction based on 2D or 3D environment in the transaction space provision section, and the transaction is concluded, the transaction is calculated according to the transaction price information presented, and the registration fee, sales fee, consulting fee and related corporate promotion fee are calculated and printed;
wherein the classification part:
reflects the reputation of the prosumer classified as the above merchant in the existing new and renewable energy trading history, and calculates the analyzed seller feedback score,
calculates the analyzed consumer feedback score by reflecting the reputation of the prosumer classified as the above consumer in the existing new and renewable energy transaction history,
evaluates the seller feedback score of the prosumer classified as the seller and the seller prosumer score by the evaluation items including the number of entries of the authentication information entered into the new and renewable energy trading system, and calculates the number of sign-up periods, the number of transactions, and the size of the production facility; and
calculates the consumer feedback score of the prosumer classified as the consumer and the consumer prosumer score evaluated by the evaluation items including the number of entries in the verification information entered into the new and renewable energy trading system, the subscription period, and the number of transactions;
wherein the recommendation mentioned above:
calculates the matching score evaluated by the evaluation items including the type of new and renewable energy, new and renewable energy production capacity, and location of the usage of the prosumer classified as the seller above, the type of new and renewable energy of the prosumer classified as the above-mentioned seller, the energy capacity of the prosumer to purchase new and renewable energy, and the location of the usage; and wherein
the computer program is stored on a storage media to run on a computer and is **characterized by** recommending and displaying one or more suitable sellers to the consumer using the feedback score, the prosumer score and the matching score.
